# EUROPEAN PATENT APPLICATION

(11) **EP 3 147 480 A1**
(43) Date of publication of application: **29.03.2017**
(21) Application number: 16190405.7
(22) Date of filing: 23.09.2016
(51) Int. Cl.: F02C 3/22, F02C 7/224

(54) **LIQUEFIED PETROLEUM GAS FUEL CONDITIONING SYSTEM FOR GAS TURBINE ENGINES**

(30) Priority: 25.09.2015 US 201514864913
(71) Applicant: General Electric Company, Schenectady, NY 12345 (US)
(72) Inventor: GAMERO, Jose Mikhail, 76146 El Refugio (MX); PALMA, Ruben, 76146 El Refugio (MX); MARTINEZ, Leodegario, 76146 El Refugio (MX); SEGURA, Jorge Benito, 76146 El Refugio (MX)
(74) Representative: Lee, Brenda

(57) **Abstract**

The present application provides a fuel conditioning system (100) for conditioning a flow of a liquefied fuel (110) for use with a gas turbine engine (10). The fuel conditioning system (130) may include a fuel skid (130) positioned about the gas turbine engine (10), one or more pumps (140) positioned about the fuel skid (130) for pumping the flow of the liquefied fuel (110), and one or more vaporizers (170) positioned about the fuel skid (130) for vaporizing the flow of the liquefied fuel (110).

## Description

### TECHNICAL FIELD

The present application and the resultant patent relate generally to gas turbine engines and more particularly relate to a propane conditioning system for the use of propane and the like as an alternative fuel source for a gas turbine engine.

### BACKGROUND OF THE INVENTION

High efficiency gas turbine engines in the power generation field typically are fueled by a gaseous fuel such as natural gas and/or a liquid fuel such as diesel, kerosene, and the like. Natural gas and/or liquid fuels generally require a reliable supply source and a reliable delivery system. As a result, the gas turbine engine may have to be taken offline if either the supply source or the delivery system is interrupted for an extended period of time. Many gas turbine engine operators thus may utilize a backup fuel supply.

Typically, a backup fuel supply system may rely on a liquid fuel such as kerosene or diesel to fuel the gas turbine engine. Various alternative light and highly volatile liquid fuels such as propane, butane, and a variety of mixes known as liquefied petroleum gas or LPG fuels also are suitable as an alternative fuel source. Various other fuels with similar thermodynamic properties such as pentane, methanol, ethanol, dimethyl ether, and the like also may be used.

In order to use these alternative liquid fuels, the fuels must be vaporized and mixed with a diluent and/or a carrier gas such as air to produce a gaseous fuel mixture. The gaseous fuel mixture then may be injected into the combustor in the same fashion as natural gas. As a result, a reliable on-site fuel conditioning system would be beneficial for the use of alternative fuels such as propane and other types of liquefied petroleum gases

### SUMMARY OF THE INVENTION

The present application and the resultant patent thus provide a fuel conditioning system for conditioning a flow of a liquefied fuel for use with a gas turbine engine. The fuel conditioning system may include a fuel skid positioned about the gas turbine engine, one or more pumps positioned about the fuel skid for pumping the flow of the liquefied fuel, and one or more vaporizers positioned about the fuel skid for vaporizing the flow of the liquefied fuel.

The present application and the resultant patent further provide a method of conditioning a flow of propane for use in a gas turbine engine. The method may include the steps of increasing the pressure of the flow of propane with a pump on a fuel skid, vaporizing the flow of propane in a thermal fluid heat vaporizer on the fuel skid, conditioning the flow of propane in a scrubber, and providing the flow of propane to the gas turbine engine.

The present application and the resultant patent further provide a fuel conditioning system for conditioning a flow of propane for use with a gas turbine engine. The fuel conditioning system may include a fuel skid positioned about the gas turbine engine, a number of pumps positioned about the fuel skid for pumping the flow of propane, and a number of thermal fluid heat vaporizers positioned about the fuel skid for vaporizing the flow of propane.

These and other features and improvements of the present application and the resultant patent will become apparent to one of ordinary skill in the art upon review of the following detailed description when taken in conjunction with the several drawings and the appended claims.

### BRIEF DESCRIPTION OF THE DRAWINGS

Fig. 1 is a schematic diagram of a gas turbine engine showing a compressor, a combustor, a turbine, and a load.
Fig. 2 is a schematic diagram of a propane conditioning system as may be described herein that may be used with the gas turbine engine of Fig. 1.

### DETAILED DESCRIPTION

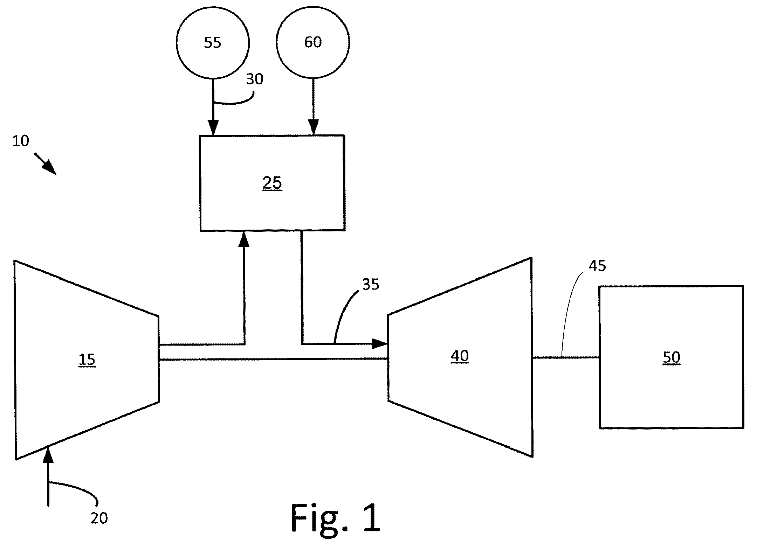

Referring now to the drawings, in which like numerals refer to like elements throughout the several views, Fig. 1 shows a schematic view of gas turbine engine 10 as may be used herein. The gas turbine engine 10 may include a compressor 15. The compressor 15 compresses an incoming flow of air 20. The compressor 15 delivers the compressed flow of air 20 to a combustor 25. The combustor 25 mixes the compressed flow of air 20 with a pressurized flow of fuel 30 and ignites the mixture to create a flow of combustion gases 35. Although only a single combustor 25 is shown, the gas turbine engine 10 may include any number of combustors 25 configured in a circumferential array. The flow of combustion gases 35 is in turn delivered to a turbine 40. The flow of combustion gases 35 drives the turbine 40 so as to produce mechanical work. The mechanical work produced in the turbine 40 drives the compressor 15 via a shaft 45 and an external load 50 such as an electrical generator and the like.

The gas turbine engine 10 may use natural gas, various types of syngas, liquid fuels, and/or other types of fuels and blends thereof. The gas turbine engine 10 may be any one of a number of different gas turbine engines offered by General Electric Company of Schenectady, New York, including, but not limited to, those such as a 7 or a 9 series heavy duty gas turbine engine and the like. The gas turbine engine 10 may have different configurations and may use other types of components. Other types of gas turbine engines also may be used herein. Multiple gas turbine engines, other types of turbines, and other types of power generation equipment also may be used herein together.

The combustor 25 may be in communication with a fuel source 55 with the flow of fuel 30. As described above, the fuel source 55 may provide a flow of natural gas and the like. Alternatively, the combustor 25 also and/or in the alternative may be in communication with one or more alternative fuel sources 60. The alternative fuel sources 60 may provide the liquefied petroleum gas fuels and the like depending upon availability, cost, and other types of parameters. In fact, the alternative fuel sources 60 may be the main fuel source depending upon these parameters and types of local conditions.

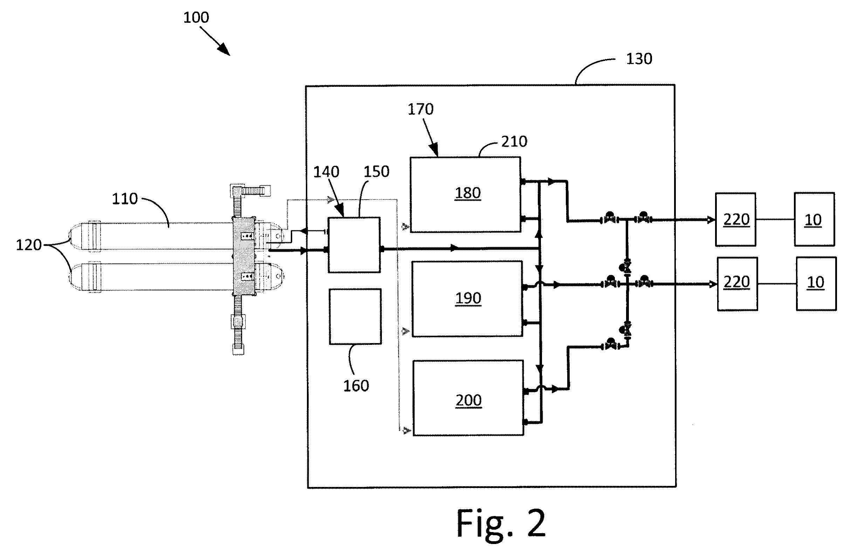

Fig. 2 shows a propane conditioning system 100 as may be described herein. The propane conditioning system 100 may be used with the gas turbine engine 10 and the like. The propane conditioning system 100 may provide a flow of a liquefied fuel 110 for combustion therein. As described above, the liquefied fuels 110 may include propane, butane, and a number of blends known as liquefied petroleum gas fuels and/or other fuels with similar thermodynamic properties such as pentane, methanol, ethanol, dimethyl ether, and the like. Other types of fuels and fuel blends may be used herein. The liquefied fuel 110 may be stored in one or more storage tanks 120. The storage tanks 120 may be of conventional design and may have any suitable size, shape, or configuration.

The propane conditioning system 100 may include one or more propane skids 130. The propane skid 130 may a permanent structure and/or the propane skid 130 may be moveable. The propane skid 130 may have any suitable size, shape, or configuration. The propane skid 130 may be positioned between or about the storage tanks 120 and the gas turbine engine 10. Any number of the propane skids 130 may be used herein.

The propane conditioning system 100 may include one or more liquid transfer pumps 140 positioned on or about the propane skid 130. The pumps 140 may be of conventional design and may have any suitable size or capacity. In this example, a first pump 150 and a second pump 160 may be used herein. Any number of the pumps 140 may be positioned on or about the propane skid 130 depending upon the overall mass flow therethrough. The pumps 140 may increase the temperature and the pressure of the liquefied fuel 110 from the storage tanks 120. The pressure and temperature of the liquefied fuel 110 may vary. Other components and other configurations may be used herein.

The propane conditioning system 100 may include one or more vaporizers 170 positioned on or about the propane skid 130. In this example, a first vaporizer 180, a second vaporizer 190, and a third vaporizer 200 are shown although any number of the vaporizers 170 may be used herein depending upon the overall mass flow therethrough. The vaporizers 170 may be a thermal fluid heat type vaporizer 210. The thermal fluid heat vaporizers 210 may vaporize the flow of the liquefied fuel 110 via a heat transfer medium. Specifically, the thermal fluid heat vaporizer 210 may provide indirect heating in which a liquid phase heat transfer medium is heated and circulated to one or more energy users within a closed loop shell and tube system. Examples of the heat transfer medium include thermal oil, glycol, water, and the like. Other types of vaporizers and other types of heat transfer mediums may be used herein. Other components and other configurations may be used herein.

The propane conditioning system 100 also may include a number of fuel conditioning components 220. The fuel conditioning components 220 may be positioned between or about the propane skid 130 and the gas turbine engine 10. The fuel conditioning components 220 also may be positioned on the propane skid 130 in whole or in part. The fuel conditioning components 220 may include a scrubber, a flow meter, a safety shutoff valve, a strainer and the like. Likewise, other types of components such as controls, valves, sensors, and the like also may be positioned on or about the propane skid 130. The overall gas turbine controller and/or dedicated propane conditioning system controller may be used. Other components and other configurations also may be used herein.

In use, the propane conditioning system 100 pumps a flow of the liquefied fuel 110 from the storage tanks 120 to the propane skid 130 via the pumps 140. The pumps 140 increase the pressure and temperature of the liquefied fuel 110 as they flow the liquefied fuel 110 to the vaporizer 170 for heat transfer and phase change. The now vaporized liquefied fuel 110 then flows through the fuel conditioning components 220 and into the combustor 25 of the gas turbine engine 10 for combustion therein. The propane skid 130 may include any number of redundant pumps, vaporizers, and other components out of abundance of caution. The propane conditioning system 100 thus allows the gas turbine engine 10 to use the liquefied fuel 110 and the like based upon availability, price, and other parameters. The propane conditioning system 100 may be offered as a complete alternative fuel system and/or as part of a retrofit in whole or in part.

It should be apparent that the foregoing relates only to certain embodiments of the present application and the resultant patent. Numerous changes and modifications may be made herein by one of ordinary skill in the art without departing from the general scope of the invention as defined by the following claims and the equivalents thereof.

Various aspects and embodiments of the present invention are defined by the following numbered clauses:
1. A fuel conditioning system for conditioning a flow of a liquefied fuel for use with a gas turbine engine, comprising:
   a fuel skid positioned about the gas turbine engine;
   one or more pumps positioned about the fuel skid for pumping the flow of the liquefied fuel; and
   one or more vaporizers positioned about the fuel skid for vaporizing the flow of the liquefied fuel.
2. The fuel conditioning system of clause 1, wherein the liquefied fuel comprises a liquefied petroleum gas fuel.
3. The fuel conditioning system of any preceding clause, wherein the liquefied fuel comprises a propane fuel.
4. The fuel conditioning system of any preceding clause, further comprising a storage tank in communication with the fuel skid.
5. The fuel conditioning system of any preceding clause, wherein the one or more pumps comprise one or more liquid transfer pumps.
6. The fuel conditioning system of any preceding clause, wherein the one or more pumps comprise a first pump and a second pump.
7. The fuel conditioning system of any preceding clause, wherein the one or more vaporizers comprise one or more thermal fluid heat vaporizers.
8. The fuel conditioning system of any preceding clause, wherein the one or more vaporizers comprise a first vaporizer, a second vaporizer, and a third vaporizer.
9. The fuel conditioning system of any preceding clause, further comprising one or more fuel conditioning components positioned about the fuel skid.
10. The fuel conditioning system of any preceding clause, wherein the one or more fuel conditioning components comprise a scrubber, a flow meter, a safety shutoff valve, or a strainer.
11. The fuel conditioning system of any preceding clause, wherein the one or more pumps comprise a first pump and a redundant pump and wherein the one or more vaporizers comprise a first vaporizer and a redundant vaporizer.
12. The fuel conditioning system of any preceding clause, wherein the one or more vaporizers comprise a heat transfer medium.
13. A method of conditioning a flow of propane for use in a gas turbine engine, comprising:
   increasing the pressure of the flow of propane with a pump on a fuel skid;
   vaporizing the flow of propane in a thermal fluid heat vaporizer on the fuel skid;
   conditioning the flow of propane in a scrubber; and
   providing the flow of propane to the gas turbine engine.
14. The method of any preceding clause, further comprising positioning a plurality of pumps on the fuel skid.
15. The method of any preceding clause, further comprising positioning a plurality of thermal fluid heat vaporizers on the fuel skid.
16. A fuel conditioning system for conditioning a flow of propane for use with a gas turbine engine, comprising:
   a fuel skid positioned about the gas turbine engine;
   a plurality of pumps positioned about the fuel skid for pumping the flow of propane; and
   a plurality of thermal fluid heat vaporizers positioned about the fuel skid for vaporizing the flow of propane.
17. The fuel conditioning system of any preceding clause, further comprising a storage tank in communication with the fuel skid.
18. The fuel conditioning system of any preceding clause, wherein the plurality of pumps comprises a first pump and a second pump.
19. The fuel conditioning system of any preceding clause, wherein the plurality of vaporizers comprises a first thermal fluid heat vaporizer, a second thermal fluid heat vaporizer, and a third thermal fluid heat vaporizer.
20. The fuel conditioning system of any preceding clause, further comprising one or more fuel conditioning components positioned about the fuel skid.

## Claims

1. A fuel conditioning system (100) for conditioning a flow of a liquefied fuel (110) for use with a gas turbine engine (10), comprising:
a fuel skid (130) positioned about the gas turbine engine (10);
one or more pumps (140) positioned about the fuel skid (130) for pumping the flow of the liquefied fuel (110); and
one or more vaporizers (170) positioned about the fuel skid (130) for vaporizing the flow of the liquefied fuel (110).

2. The fuel conditioning system (100) of claim 1, wherein the liquefied fuel (110) comprises a liquefied petroleum gas fuel.

3. The fuel conditioning system (100) of claim 1, wherein the liquefied fuel (110) comprises a propane fuel.

4. The fuel conditioning system (100) of claim 1, 2 or 3, further comprising a storage tank (120) in communication with the fuel skid (130).

5. The fuel conditioning system (100) of any of claims 1 to 4, wherein the one or more pumps (140) comprise one or more liquid transfer pumps.

6. The fuel conditioning system (100) of any preceding claim, wherein the one or more pumps (140) comprise a first pump (150) and a second pump (160).

7. The fuel conditioning system (100) of any preceding claim, wherein the one or more vaporizers (170) comprise one or more thermal fluid heat vaporizers (210).

8. The fuel conditioning system (100) of any preceding claim, wherein the one or more vaporizers (170) comprise a first vaporizer (180), a second vaporizer (190), and a third vaporizer (200).

9. The fuel conditioning system (100) of any preceding claim, further comprising one or more fuel conditioning components (220) positioned about the fuel skid (130).

10. The fuel conditioning system (100) of claim 9, wherein the one or more fuel conditioning components (220) comprise a scrubber, a flow meter, a safety shutoff valve, or a strainer.

11. The fuel conditioning system (100) of any preceding claim, wherein the one or more pumps (140) comprise a first pump (150) and a redundant pump (160) and wherein the one or more vaporizers (170) comprise a first vaporizer (180) and a redundant vaporizer (190).

12. The fuel conditioning system (100) of any preceding claim, wherein the one or more vaporizers (170) comprise a heat transfer medium.

13. A method of conditioning a flow of propane (110) for use in a gas turbine engine (10), comprising:
increasing the pressure of the flow of propane (110) with a pump (140) on a fuel skid (130);
vaporizing the flow of propane (110) in a thermal fluid heat vaporizer (210) on the fuel skid (130);
conditioning the flow of propane (110) in a scrubber (220); and
providing the flow of propane (110) to the gas turbine engine (10).

14. The method of claim 13, further comprising positioning a plurality of pumps (140) on the fuel skid (130).

15. The method of claim 13 or 14, further comprising positioning a plurality of thermal fluid heat vaporizers (210) on the fuel skid (130).
